# EUROPEAN PATENT APPLICATION

(11) **EP 4 818 235 A1**
(43) Date of publication of application: **07.10.2026**
(21) Application number: 24897064.2
(22) Date of filing: 27.09.2024
(51) Int. Cl.: C08J 5/18, C08K 3/34, C08L 23/12, C08L 97/02

(54) **METHOD FOR PRODUCING SHEET-LIKE EXTRUSION MOLDED PRODUCT**

(30) Priority: 29.11.2023 JP 2023202030
(71) Applicant: Panasonic Housing Solutions Co., Ltd., Kadoma-shi, Osaka 571-8686 (JP)
(72) Inventor: WATANABE, Kouiti, Kadoma-shi, Osaka 571-8686 (JP)
(74) Representative: Müller-Boré & Partner Patentanwälte PartG mbB
(86) International application number: PCT/JP2024/034570
(87) International publication number: WO 2025/115374

(57) **Abstract**

An object of the present disclosure is to provide a method for producing sheet-like extrusion molded product, the method being configured to suppress an extrusion molding machine from wearing, improve moldability of the thermoplastic resin composition, and produce a sheet-like extrusion molded product with a small coefficient of linear expansion. A method for producing sheet-like extrusion molded product includes: kneading a thermoplastic resin composition; and then extrusion-molding the thermoplastic resin composition through a mold. The thermoplastic resin composition includes a thermoplastic resin and a filler. The thermoplastic resin includes polypropylene having a MFR of greater than or equal to 20 g/10 min and less than or equal to 60 g/10 min at a temperature of 230°C and a load of 2.16 kgf. The filler includes wood flour and talc. A content of the filler is greater than or equal to 60 parts by mass and less than or equal to 72 parts by mass with respect to 100 parts by mass of a total of the thermoplastic resin and the filler. A content of the wood flour is greater than or equal to 20 parts by mass and less than or equal to 70 parts by mass with respect to 100 parts by mass of a total of the filler.

## Description

### Technical Field

The present disclosure relates to a method for producing a sheet-like extrusion molded product.

### Background Art

Patent Literature 1 discloses an inorganic filler-containing resin composition. This inorganic filler-containing resin composition includes a thermoplastic resin and an inorganic filler. Further, wood flour is mixed with the inorganic filler-containing resin composition. The content of the inorganic filler is 40% by mass or greater based on the total mass of the inorganic filler-containing resin composition.

There is the problem that an extrusion molding machine is susceptible to wear when the inorganic filler-containing resin composition of Patent Literature 1 is employed in using an extrusion molding method. Moreover, when the composition of the inorganic filler-containing resin composition is adjusted in an attempt to suppress the extrusion molding machine from wearing, the moldability of the inorganic filler-containing resin composition may decrease, or the coefficient of linear expansion of a molded product may increase.

### Citation List

### Patent Literature

Patent Literature 1: JP 2004-203982 A

### Summary of Invention

It is an object of the present disclosure to provide a method for producing sheet-like extrusion molded product, the method being configured to suppress an extrusion molding machine from wearing, improve moldability of the thermoplastic resin composition, and produce a sheet-like extrusion molded product with a small coefficient of linear expansion.

A method for producing sheet-like extrusion molded product according to an aspect of the present disclosure includes: kneading a thermoplastic resin composition; and then extrusion-molding the thermoplastic resin composition through a mold. The thermoplastic resin composition contains a thermoplastic resin and a filler. The thermoplastic resin includes polypropylene having a MFR of greater than or equal to 20 g/10 min and less than or equal to 60 g/10 min at a temperature of 230°C and a load of 2.16 kgf. The filler includes wood flour and talc. A content of the filler is greater than or equal to 60 parts by mass and less than or equal to 72 parts by mass with respect to 100 parts by mass of a total of the thermoplastic resin and the filler. A content of the wood flour is greater than or equal to 20 parts by mass and less than or equal to 70 parts by mass with respect to 100 parts by mass of a total of the filler.

### Description of Embodiments

### 1. Overview

In general, to use an extrusion molding method, an extrusion molding machine is employed. The extrusion molding machine includes, for example, an extruder, a gear pump, a mold, a cooling machine, a haul-off machine, and a cutter.

Here, examples of the extruder include a single screw extruder including one screw and a twin screw extruder including two screws. The twin screw extruder includes a co-rotating twin screw extruder and a counter-rotating twin screw extruder.

The gear pump is disposed between the extruder and the mold. The gear pump is a pump that uses engagement portions of gears (toothed wheels) to transport a melted resin from the extruder to the mold.

The mold is specifically a die. The die is a cap attached to the gear pump. In the present embodiment, for example, a T-die (a hanger die) is used. This enables the melted resin to be extruded in sheet form.

The cooling machine cools and solidifies the resin extruded in sheet form. In the present embodiment, for example, a three-roll-type cooling roll is used.

The haul-off machine hauls off a sheet-like extrusion molded product thus solidified and having an elongated shape. Here, a surface of the sheet-like extrusion molded product may be subjected to corona treatment, and then, a decorative sheet may be affixed to the surface. Examples of the decorative sheet include a sheet on which a grain pattern or a stone pattern has been printed.

The cutter cuts the sheet-like extrusion molded product thus hauled off and having the elongated shape (including a product to which the decorative sheet has been affixed) to a predetermined length. The sheet-like extrusion molded product thus obtained is used as, for example, a floor material.

Here, when the inorganic filler-containing resin composition of Patent Literature 1 is employed to produce the sheet-like extrusion molded product, the screw of the extruder may wear, or the gears of the gear pump may wear. As described above, when the extrusion molding machine wears, the sheet-like extrusion molded product is difficult to produce stably, and thus, components, such as the screw and the gears, have to be regularly replaced every few months to every six months. Therefore, running cost, such as maintenance cost, increases.

Therefore, the present inventors searched for causes of the wear of the extrusion molding machine to suppress the extrusion molding machine from wearing. As a result, for the inorganic filler-containing resin composition of Patent Literature 1, the present inventors assumed that a high content of the inorganic filler (in particular, mica) is one of the causes of the wear.

The inorganic filler is, however, necessary, for example, to ensure the strength of the sheet-like extrusion molded product. Therefore, simply reducing the content of the inorganic filler is not a solution. A reduced content of the inorganic filler may influence the moldability and/or the coefficient of linear expansion of the sheet-like extrusion molded product.

In view of the foregoing, the present inventors have developed a method for producing sheet-like extrusion molded product as described below. That is, the method for producing sheet-like extrusion molded product according to the present embodiment includes kneading a thermoplastic resin composition; and then extrusion-molding the thermoplastic resin composition through a mold. The thermoplastic resin composition includes a thermoplastic resin and a filler.

Here, the thermoplastic resin includes polypropylene having a MFR of greater than or equal to 20 g/10 min and less than or equal to 60 g/10 min at a temperature of 230°C and a load of 2.16 kgf.

The filler includes wood flour and talc. The content of the filler is greater than or equal to 60 parts by mass and less than or equal to 72 parts by mass with respect to 100 parts by mass of the total of the thermoplastic resin and the filler. The content of the wood flour is greater than or equal to 20 parts by mass and less than or equal to 70 parts by mass with respect to 100 parts by mass of the total of the filler.

When the conditions described above are satisfied, the extrusion molding machine can be suppressed from wearing, details of which will be described later. The moldability of the thermoplastic resin composition can be improved. The sheet-like extrusion molded product with a small coefficient of linear expansion can be produced.

### 2. Details

The method for producing sheet-like extrusion molded product according to the present embodiment will be described below.

The sheet-like extrusion molded product according to the present embodiment is produced by the extrusion molding method. To use the extrusion molding method, a publicly known extrusion molding machine may be employed.

That is, the method for producing sheet-like extrusion molded product according to the present embodiment includes: kneading the thermoplastic resin composition by using, for example, the extrusion molding machine described above, and then, extrusion-molding the thermoplastic resin composition through the mold (die).

The thermoplastic resin composition according to the present embodiment includes the thermoplastic resin and the filler.

The thermoplastic resin includes polypropylene having a MFR of greater than or equal to 20 g/10 min and less than or equal to 60 g/10 min at a temperature of 230°C and a load of 2.16 kgf. Here, the MFR is a melt mass-flow rate and can be measured based on, for example, JIS K7210. The MFR of the polypropylene is preferably greater than or equal to 25 g/10 min. The MFR of the polypropylene is preferably less than or equal to 50 g/10 min.

When the MFR of the polypropylene is less than 20 g/10 min, the melted resin is not readily extruded from the mold, and the speed of extrusion decreases, which may reduce the productivity of the sheet-like extrusion molded product. When polypropylene having a MFR of greater than 60 g/10 min is employed, the flowability is too high, which may result in a large deviation in thickness of the sheet-like extrusion molded product, and moreover, such polypropylene is not readily available, and therefore, an upper limit value of the MFR of the polypropylene is set to 60 g/10 min.

As long as the flowability of the thermoplastic resin composition is not impaired, the thermoplastic resin may include a thermoplastic resin other than the polypropylene. Examples of the thermoplastic resin other than the polypropylene include, but are not particularly limited to, polyethylene, polybutylene, polystyrene, polyvinyl chloride, polycarbonate, polyethylene terephthalate, polyamide 66, and polyamide 6.

The filler includes the wood flour and the talc. As described above, the wood flour is contained in the thermoplastic resin composition, which enables the coefficient of linear expansion of the sheet-like extrusion molded product to be reduced. Moreover, the Mohs hardness of the talc is 1 and is low among standard minerals, and therefore, when the talc is contained in the thermoplastic resin composition, the strength of the sheet-like extrusion molded product can be ensured while the extrusion molding machine (in particular, the screw and/or the gears) is suppressed from wearing.

Examples of the wood flour include, but are not particularly limited to, sawdust of a conifer material and/or a broad-leaved tree material. Examples of the conifer material include, but are not particularly limited to, Tsuga heterophylla (Western hemlock).

The wood flour includes wood flour which passes through preferably a 30-mesh sieve (mesh size: 500 µm), more preferably a 36-mesh sieve (mesh size: 425 µm), much more preferably a 60-mesh sieve (mesh size: 250 µm). As described above, the wood flour having a small particle size is contained in the thermoplastic resin composition, which enables the coefficient of linear expansion of the sheet-like extrusion molded product to be reduced.

The content of the wood flour is greater than or equal to 20 parts by mass, preferably greater than or equal to 40 parts by mass and less than or equal to 70 parts by mass, with respect to 100 parts by mass of the total of the filler. When the content of the wood flour is less than 20 parts by mass, the coefficient of linear expansion of the sheet-like extrusion molded product may increase. In particular, the content of the wood flour being greater than or equal to 40 parts by mass enables the coefficient of linear expansion of the sheet-like extrusion molded product to be reduced. In contrast, when the content of the wood flour is greater than 70 parts by mass, the thermoplastic resin composition may be difficult to mold.

The content of the wood flour is preferably greater than or equal to 35 parts by mass and less than or equal to 45 parts by mass with respect to 100 parts by mass of the total of the thermoplastic resin and the filler. This facilitates the molding of the thermoplastic resin composition and can also reduce the coefficient of linear expansion of the sheet-like extrusion molded product.

The mean particle size of the talc is preferably greater than or equal to 12 µm, more preferably greater than or equal to 14 µm. Here, the mean particle size refers to the volume-based median diameter (D50) obtained by particle size distribution measurement by a laser diffraction method. The mean particle size of the talc is preferably less than or equal to 50 µm, more preferably less than or equal to 30 µm. This enables the coefficient of linear expansion of the sheet-like extrusion molded product to be reduced.

The filler may further include mica. The Mohs hardness of the mica is 2.5 to 3. In contrast, the Mohs hardness of the talc is 1. As described above, the Mohs hardness of the mica is higher than the Mohs hardness of the talc. Therefore, further including the mica in the filler enables the strength of the sheet-like extrusion molded product to be enhanced.

When the filler further includes the mica, the content of the mica is preferably greater than or equal to 1 parts by mass and less than or equal to 10 parts by mass with respect to 100 parts by mass of the total of the thermoplastic resin and the filler. As described above, when the content of the mica is less than or equal to 10 parts by mass, the extrusion molding machine can be suppressed from wearing. Moreover, when the content of the mica is greater than or equal to 1 parts by mass, the strength of the sheet-like extrusion molded product can be enhanced.

The content of the filler is greater than or equal to 60 parts by mass and less than or equal to 72 parts by mass with respect to 100 parts by mass of the total of the thermoplastic resin and the filler. When the content of the filler is less than 60 parts by mass, the flowability of the thermoplastic resin composition during extrusion molding is too high, which may result in a difficulty in molding. In contrast, when the content of the filler is greater than 72 parts by mass, the flowability of the thermoplastic resin composition during the extrusion molding is too low, which may result in a difficulty in molding.

Thus, the thermoplastic resin composition can be obtained by mixing and kneading the thermoplastic resin and the filler, for example, by using a mixer such as a Henschel mixer. In this case, the thermoplastic resin composition has a MFR of preferably greater than or equal to 2.0 g/10 min and less than or equal to 6.0 g/10 min at a temperature of 230°C and a load of 2.16 kgf.

Next, the thermoplastic resin composition is kneaded by, for example, using the extrusion molding machine and is then extrusion-molded through the mold (die). The sheet-like extrusion molded product can thus be obtained. The thickness of the sheet-like extrusion molded product is, but not particularly limited to being, greater than or equal to 0.5 mm and less than or equal to 3 mm. As described above, a decorative sheet may be affixed to a surface of the sheet-like extrusion molded product.

### 3. Aspects

As can be seen from the embodiment described above, the present disclosure includes the following aspects.

A first aspect is a method for producing sheet-like extrusion molded product, the method including: kneading a thermoplastic resin composition; and then extrusion-molding the thermoplastic resin composition through a mold. The thermoplastic resin composition contains a thermoplastic resin and a filler. The thermoplastic resin includes polypropylene having a MFR of greater than or equal to 20 g/10 min and less than or equal to 60 g/10 min at a temperature of 230°C and a load of 2.16 kgf. The filler includes wood flour and talc. A content of the filler is greater than or equal to 60 parts by mass and less than or equal to 72 parts by mass with respect to 100 parts by mass of a total of the thermoplastic resin and the filler. A content of the wood flour is greater than or equal to 20 parts by mass and less than or equal to 70 parts by mass with respect to 100 parts by mass of a total of the filler.

This aspect enables an extrusion molding machine to be suppressed from wearing. The moldability of the thermoplastic resin composition can be improved. A sheet-like extrusion molded product with a small coefficient of linear expansion can be produced.

A second aspect is a method for producing sheet-like extrusion molded product based on the first aspect. In the second aspect, the filler further includes mica. A content of the mica is less than 10 parts by mass with respect to 100 parts by mass of the total of the thermoplastic resin and the filler.

With this aspect, further including the mica in the filler enables the strength of the sheet-like extrusion molded product to be enhanced. Further, when the content of the mica is less than or equal to 10 parts by mass, the extrusion molding machine can be suppressed from wearing.

A third aspect is a method for producing sheet-like extrusion molded product based on the first or second aspect. In the third aspect, the content of the wood flour is greater than or equal to 40 parts by mass and less than or equal to 70 parts by mass with respect to 100 parts by mass of the total of the filler.

In this aspect, the content of the wood flour is greater than or equal to 40 parts by mass, which enables the coefficient of linear expansion of the sheet-like extrusion molded product to be reduced. The content of the wood flour is less than or equal to 70 parts by mass, which enables the moldability of the thermoplastic resin composition to be suppressed from decreasing.

A fourth aspect is a method for producing sheet-like extrusion molded product based on any one of the first to third aspects. In the fourth aspect, the wood flour includes wood flour which passes through a 60-mesh sieve.

This aspect enables the coefficient of linear expansion of the sheet-like extrusion molded product to be reduced.

### Examples

The present disclosure will be specifically described below with reference to examples. The present disclosure is not limited to the examples below.

### 1. Sample

### (1) Material

The following materials were mixed in the proportions shown in Table 1 by using a Henschel mixer. A thermoplastic resin composition was thus obtained.

### <Thermoplastic Resin>

Polypropylene 1: Product name "BC03B" (MFR: 30 g/10 min) manufactured by Japan Polypropylene Corporation
Polypropylene 2: Product name "BC3AD" (MFR: 10 g/10 min) manufactured by Japan Polypropylene Corporation

### <Filler>

### <<Wood flour>>

Wood flour 1: Sawdust of Tsuga heterophylla (which passes through a 40-mesh sieve)
Wood flour 2: Sawdust of Tsuga heterophylla (which passes through a 60-mesh sieve)

### <<Talc>>

Talc 1: Product name "sss" (mean particle size: 12 µm) manufactured by Nippon Talc Co., Ltd.
Talc 2: product name "MS-T" (mean particle size: 20 µm) manufactured by Nippon Talc Co., Ltd.

### <<Mica>>

Mica: Product name "60-C" manufactured by Kuraray Co., Ltd

### (2) Production Method

The thermoplastic resin composition was kneaded by using the extrusion molding machine described above and was extrusion-molded through a mold (die). A sheet-like extrusion molded product was thus obtained. Specifically, after the thermoplastic resin composition was loaded into an extruder (a co-rotating twin screw extruder) and was kneaded, the thermoplastic resin composition was extruded from a T-die through the gear pump, was wound as it was around a cooling roll (3-roll method), and was continuously molded. Thus, a sheet-like extrusion molded product having a thickness of 1.3 mm and a width of 20 cm was obtained. Note that the extrusion speed was about 5 to 15 m/min.

### 2. Tests

### (1) Moldability

The condition of the resin ejected from the T-die was observed, and observation results were classified based on the following evaluation criteria, thereby evaluating the moldability.

### <Evaluation Criteria>

A: The ejection from the T-die was stable and the molding was easy.
B: The ejection from the T-die was unstable and the molding was difficult (a favorable range of an ejection pressure and/or an ejection temperature was narrow, and a control condition was stringent).
C: The molding was impossible (there was no favorable range of the ejection pressure and/or the ejection temperature, and the ejection was impossible, or the favorable range was very narrow, which was not suitable for the continuous production).

### (2) Coefficient of Linear Expansion

A method by a thermomechanical analysis (TMA) set forth in JIS K7197 was used to measure the coefficient of linear expansion of the sheet-like extrusion molded product. Note that Comparative Examples 6, 7, 16, and 17 for which the moldability was evaluated to be "C" were not evaluated in terms of the following properties.

### (3) MFR

The MFR of the thermoplastic resin composition at a temperature of 230°C and a load of 2.16 kgf was measured based on JIS K7210.

### (4) Wear Property

Before producing the sheet-like extrusion molded product and after producing the sheet-like extrusion molded product for a predetermined period of time, the interior of the extrusion molding machine was observed, and observation results of the difference before and after the producing were classified based on the following evaluation criteria, thereby evaluating the wear property.

### <Evaluation Criteria>

A: Wear was barely observed in the screw, the gears, and the like of the extrusion molding machine.
B: Wear was slightly observed in the screw, the gears, and the like of the extrusion molding machine.
C: Wear was obviously observed in the screw, the gears, and the like of the extrusion molding machine.

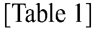

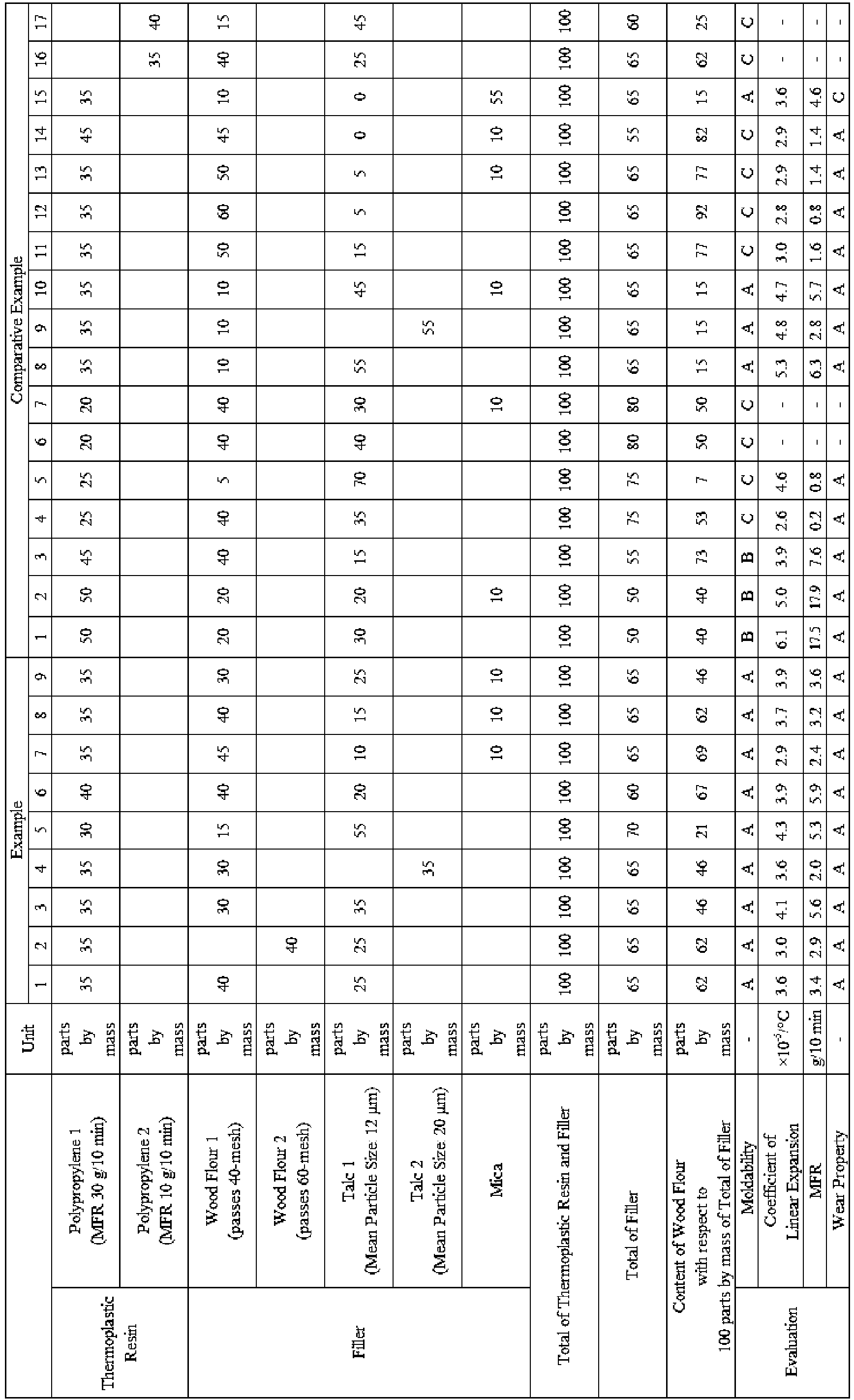

From Table 1, it was confirmed that Example 1 to 9 suppressed an extrusion molding machine from wearing, improved the moldability of the thermoplastic resin composition, and can produce a sheet-like extrusion molded product with a small coefficient of linear expansion as compared with Comparative Examples 1 to 17.

From Examples 1 and 2, it was confirmed that including, in the wood flour, wood flour which passes through a 60-mesh sieve can further reduce the coefficient of linear expansion of the sheet-like extrusion molded product.

From Comparative Examples 16 and 17, it was confirmed that when the MFR of the polypropylene was less than 20 g/10 min at a temperature of 230°C and a load of 2.16 kgf, the moldability decreased.

From Comparative Examples 1 to 7, and Comparative Example 14, it was confirmed that when the content of the filler was greater than or equal to 60 parts by mass and less than or equal to 72 parts by mass with respect to 100 parts by mass of the total of the thermoplastic resin and the filler, the moldability decreased.

From Comparative Example 5 and Comparative Examples 8 to 10, it was confirmed that when the content of the wood flour was less than 20 parts by mass with respect to 100 parts by mass of the total of the filler, the coefficient of linear expansion was large. Note that also in Comparative Example 15, the content of the wood flour was less than 20 parts by mass with respect to 100 parts by mass of the total of the filler, but the coefficient of linear expansion was small. From the comparison between Comparative Example 9 and Comparative Example 15, it can be inferred that the reason for this is mica.

From Comparative Example 3 and Comparative Examples 11 to 14, it was confirmed that when the content of the wood flour was greater than 70 parts by mass with respect to 100 parts by mass of the total of the filler, the moldability decreased.

From Comparative Example 15, it was confirmed that when the content of the mica was greater than 10 parts by mass with respect to 100 parts by mass of the total of the thermoplastic resin and the filler, the extrusion molding machine wore down.

## Claims

1. A method for producing a sheet-like extrusion molded product, the method comprising:
kneading a thermoplastic resin composition; and then
extrusion-molding the thermoplastic resin composition through a mold,
the thermoplastic resin composition containing a thermoplastic resin and a filler,
the thermoplastic resin including polypropylene having a MFR of greater than or equal to 20 g/10 min and less than or equal to 60 g/10 min at a temperature of 230°C and a load of 2.16 kgf,
the filler including wood flour and talc,
a content of the filler being greater than or equal to 60 parts by mass and less than or equal to 72 parts by mass with respect to 100 parts by mass of a total of the thermoplastic resin and the filler,
a content of the wood flour being greater than or equal to 20 parts by mass and less than or equal to 70 parts by mass with respect to 100 parts by mass of a total of the filler.

2. The method of claim 1, wherein
the filler further includes mica, and
a content of the mica is less than or equal to 10 parts by mass with respect to 100 parts by mass of the total of the thermoplastic resin and the filler.

3. The method of claim 1, wherein
the content of the wood flour being greater than or equal to 40 parts by mass and less than or equal to 70 parts by mass with respect to 100 parts by mass of the total of the filler.

4. The method of any one of claims 1 to 3, wherein
the wood flour includes wood flour which passes through a 60-mesh sieve.
